(19)

Europäisches
Patentamt
European
Patent Office
Office européen
des brevets

(11) **EP 2 405 245 A2**

(12) **EUROPEAN PATENT APPLICATION**

(43) Date of publication:
**11.01.2012 Bulletin 2012/02**

(51) Int Cl.:
*G01J 4/00* [(2006.01)]    *G01J 4/04* [(2006.01)]

(21) Application number: **11173305.1**

(22) Date of filing: **08.07.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **08.07.2010 US 362633 P**<br> **07.09.2010 US 380677 P**<br> **06.07.2011 US 177116**<br><br>(71) Applicant: **OFS Fitel, LLC**<br>**Norcross, GA 30071 (US)** | (72) Inventors:<br> • **Mikhailo, Vitaly**<br>  **Oxford, NJ New Jersey 07863 (US)**<br> • **Westbrook, Paul S.**<br>  **Bridgewater, NJ New Jersey 08807 (US)**<br><br>(74) Representative: **Zimmermann, Tankred Klaus**<br>**Schoppe, Zimmermann, Stöckeler**<br>**Zinkler & Partner**<br>**P.O. Box 246**<br>**82043 Pullach (DE)** |

(54) **Self-calibration procedure for optical polarimeters**

(57)     A procedure for self-calibration of an optical polarimeter has been developed that eliminates the need for "known" input signals to be used. The self-calibration data is then taken by moving a polarization controller between several random and unknown states of polarization (SOPs) and recording the detector output values ($D_0$, ..., $D_3$) for each state of polarization. These values are then used to create an "approximate" calibration matrix. In one exemplary embodiment, the SOP of the incoming signal is adjusted three times (by adjusting a separate polarization controller element, for example), creating a set of four detector output values for each of the four polarizations states of the incoming signal - an initial calibration matrix. The first row of this initial calibration matrix is then adjusted to fit the power measurements using a least squares fit. In the third and final step, the remaining elements of the calibration matrix are adjusted to a given constraint (for example, DOP=100% for all SOPs).

FIG. 4

Launch an optical signal of a first state of polarization (SOP) into polarimeter, maintain DOP of unity — 100

Measure power ($S_0$) of current SOP and N detector values ($D_i$) — 110

At least four signals? — 120

Adjust polarization controller to different SOP — 125

Create an initial calibration matrix C, of size 4xN, N being the number of detectors in the polarimeter — 130

Least-squares fit the first row of matrix C to the measured power — 150

Fit of matrix C to predefined constraint — 160

EP 2 405 245 A2

Printed by Jouve, 75001 PARIS (FR)

## Description

### *Cross-Reference to Related Applications*

This application claims the benefit of US Provisional Application No. 61/362,633 filed July 8, 2010 and US Provisional Application No. 61/380,677 filed September 7, 2010, both of which are herein incorporated by reference.

### *Technical Field*

The present invention relates to a technique for calibrating an optical polarimeter and, more particularly, to a self-calibration procedure that does not rely on the use of an external polarization "standard" and can be used "in place" to calibrate a polarimeter during installation and/or operation in the field.

### *Background of the Invention*

Polarimeters measure the state of polarization of an input optical signal. Measurement of light polarization and its variation in time is important for many photonic applications, including telecommunications and fiber sensors. Widespread use of polarimeters has been limited, however, since they are typically made of bulk optic components, have an electrical bandwidth of less than 1MHz and require recalibration to operate over large wavelength ranges. Moreover, polarimeters are required to be calibrated and in most cases an external, reference polarimeter is required.

Additionally, the polarization transfer characteristics of an optical fiber device are important in the design of coherent lightwave communication systems. The transfer properties of fiber-based optic devices such as isolators, couplers, amplifiers and the like depend on the polarization state in the fiber itself. Thus, to completely characterize these devices, the relationship between the input and output states of polarization (SOP) of the fiber-based system must be known.

A conventional method for measuring the SOP of a light beam includes aligning a waveplate and a linear polarizer in the optical path of the beam. The waveplate is rotatable about the optical axis and is typically a quarter-wave plate. An optical sensor, such as a photodetector, is positioned to measure the intensity of light transmitted by the waveplate and polarizer. In operation, the waveplate is sequentially rotated to a minimum of four angular positions about the optical axis relative to the linear polarizer, and the transmitted light intensity is measured at each position by the photodetector. A disadvantage of this method is the mechanical movement of the waveplate and the resulting slow speed of the measurement. Additionally, since every optical element must be aligned in free space, miniaturization of the device is not possible.

This limitation has led to the development of in-line fiber polarimeters. See, for example, the article entitled "In-line Light-saving Photopolarimeter and its Fiber-optic Analog" by R.M.A. Azzam, appearing in Optics Letters, Vol. 12, pp. 558-60, 1987. The earliest in-line polarimeters, as exemplified by US Patent 4,681,450 issued to R.M.A. Azzam on July 21, 1987, uses a set of four solid-state detectors that absorb only a small portion of a propagating optical signal, allowing for the remaining portion of the signal to continue along and impinge each detector in turn. Each detector develops an electrical signal proportional to the polarization-dependent fraction of light that it absorbs from the fiber. The four electrical output signals are then used to determine the four Stokes parameters of light in the fiber via an instrument matrix determined by calibration (at times, referred to as a "calibration matrix").

The four Stokes parameters $S_0$, $S_1$, $S_2$ and $S_3$ are generally defined as follows: $S_0$ is the total power, $S_1$ is the linearly-polarized horizontal component minus the linearly-polarized vertical component, $S_2$ is the linearly-polarized component at 45˚ minus the linearly-polarized component at -45˚, and $S_3$ is the right-hand circularly polarized component minus the left-hand circularly polarized component. Thus, a 4x4 calibration matrix C can be developed to define the relationship between a set of four detector output signals $D_0$, $D_1$, $D_2$, $D_3$ and the four Stokes parameters $S_0$, $S_1$, $S_2$, $S_3$:

$$\begin{bmatrix} S_0 \\ S_1 \\ S_2 \\ S_3 \end{bmatrix} = \begin{bmatrix} C_{00} & C_{01} & C_{02} & C_{03} \\ C_{10} & C_{11} & C_{12} & C_{13} \\ C_{20} & C_{21} & C_{22} & C_{23} \\ C_{30} & C_{31} & C_{32} & C_{33} \end{bmatrix} \begin{bmatrix} D_0 \\ D_1 \\ D_2 \\ D_3 \end{bmatrix}.$$

While this relationship is straightforward, the ability to create the calibration matrix in the first instance is difficult. As mentioned above, external devices have been used to control the incoming SOP to assist in determining selected components of the matrix. In other arrangements used in the prior art, one or more "correction factors" are needed to be added to the relationship to arrive at the desired solution. See, for example, US Patent 6,917,427 entitled "Highly Accurate Calibration of Polarimeters" and issued to E. Krause et al. on July 12, 2005.

In most cases, these prior art arrangements still suffer from a relatively narrow electrical bandwidth and wavelength dependence.

Thus, a need remains for a more robust in-line fiber polarimeter that still provides the desired accuracy and an improved method for calibrating the polarimeter.

### *Summary of the Invention*

The needs remaining in the prior art are addressed by the present invention, which relates to a technique for calibrating an optical polarimeter and, more particularly, to a self-calibration procedure that does not rely on the use of an external polarization "standard" and can be used to calibrate a polarimeter during installation and/or operation in the field without having to remove the polarimeter from its current location to perform the calibration.

It is an advantage of the present invention that the self-calibration technique is not limited to any specific type of polarimeter.

In accordance with one embodiment of the present invention, a fit of the elements of a calibration matrix C to a set of measured detector values corresponding to a given input set of SOPs, which may or may not be known, is performed. The only constraint for this self-calibration procedure is that the source is a polarized light source (laser) with a degree of polarization (DOP) close to 100%. The DOP marks the ratio of polarized power to total power and, in terms of the Stokes parameters, can be defined as follows:

$$DOP = \frac{\sqrt{S_1^2 + S_2^2 + S_3^2}}{S_0}.$$

The data for self-calibration is then taken, for example, by moving a polarization controller several times to allow for the launch of signals with random and unknown SOPs and recording the detector output values $(D_0, ..., D_3)$ for each state of polarization. These values are then used, in one embodiment, to create an "approximate" (initial) calibration matrix. In one exemplary embodiment, an initial matrix is derived from the measured detector output values. Alternatively and as discussed in detail below, an estimated calibration matrix is used as the initial calibration matrix. One specific guess is based upon the presumption of a tetrahedral polarimeter configuration as defined below; alternatively, a random collection of values may be used as the initial calibration matrix. In addition to the detector values, the total signal power may also be recorded for each of the several random and unknown SOPs. In this case, the measured power will be used in addition to the measured detector values to obtain the calibration.

In the next step, the first row of this initial calibration matrix is adjusted to produce the best fit of the measured total signal power values, preferably using a least squares fit. Preferably, the launched signal power is constant during the calibration process (in that case, the power does not need to be measured for each of the several random and unknown SOPs). The first row of the initial calibration matrix is then fit to a constant power value for each of the several random and unknown launched input SOPs. It is to be noted that utilization of total signal power is an alternative only in the sense that if the power is fixed, the first row of the calibration matrix can be fit to a constant power. For this embodiment, either measured power or assumed constant power is required.

In the third step, the remaining elements of the calibration matrix are adjusted so that the DOP=100% for all SOPs.

In other embodiments, constraints on the input signal other than DOP=100% are utilized. For example, one constraint includes maintaining a known angle (or angles) in the Stokes space among two or more SOPs of the different launched signals. Alternatively, instead of applying a constraint to the incoming signals, the arrangement of the detectors along the polarimeter may be constrained. These constraints include, but are not limited to, creating fixed angles of projection states (as defined below), defining fixed extinctions for the detectors, or using more than four detectors (i.e., creating an over-determined polarimeter).

It has been found that a polarimeter formed in accordance with the present invention will provide a relatively broad calibration bandwidth if the properties of the detectors are "matched". The matching is generally in terms of characteristics such as responsivity and polarization optics (e.g., waveplates, birefringent fiber, polarizers and the like) and is preferably designed to be matched over a range of optical wavelengths, or electrical frequency, or operating temperature, etc.

Further aspects and advantages of the present invention will become apparent during the course of the following discussion and by reference to the accompanying drawings.

### *Brief Description of the Drawings*

Referring now to the drawings,

FIG. 1 is a schematic of an all-fiber polarimeter that may be characterized using the self-calibration technique of the present invention;

FIG. 2 contains plots of both DOP and grating scatter power as a function of wavelength for the arrangement of FIG. 1;

FIG. 3 is a plot of the normalized frequency response of a set of four matched detectors used in the arrangement of FIG. 1;

FIG. 4 is a high level flow chart illustrating the self-calibration process of one embodiment of the present invention;

FIG. 5 illustrates a polarimeter of FIG. 1, when used in combination with a polarized laser source and polarization controller to perform the self-calibration technique of the present invention;

FIG. 6 is a variation of the arrangement of FIG. 4, in this case including a power monitor to measure the input power of each applied optical signal at the entrance of the polarimeter;

FIG. 7 is alternative embodiment of the present invention, utilizing a linear polarizer at the input of the polarimeter to create a known relationship (i.e., pair of orthogonal inputs) between at least two of the input optical signals; and

FIG. 8 is a plot illustrating the standard deviation (and maximum) of the DOP as a function of the number of points involved in the calibration procedure.

### *Detailed Description*

A polarimeter measures the four Stokes parameters defining the state of polarization of an incoming signal. A Stokes polarimeter is generally comprised of, at the least, polarization-sensitive optics, such as waveplates and polarizers, followed by a set of at least four detectors. The detectors are thus configured to measure the projection of the incoming light onto different Stokes vectors, establishing a linear relationship between the detector values and the Stokes vectors. Reference to the detectors in the following discussion will be understood to include polarization sensitive optics that precede the detectors in the optical path. The determination of this relationship is referred to as the calibration procedure and results in the creation of a calibration matrix C, relating N detector measurements to the four Stokes parameters (presented as a 4xN matrix). The generic procedure of the present invention performs a fit of the calibration matrix parameters to measured data. The data for such a procedure is obtained by launching light with different (and perhaps unknown) polarization states into the polarimeter and recording the detector voltages in each case.

In order for the calibration matrix to converge to a unique solution, and as will be discussed in detail below, there must be one or more constraints placed on the incoming polarizations and/or the detector measurements. These constraints include one or more of the following: (1) degree of polarization (DOP) of approximately 100% for all launched signals; (2) constant power for all launched signals; (3) fixed, known orientations among the Stokes vectors of the launched signals; (4) two or more detectors projecting onto Stokes vectors with known orientations that are then not adjusted during the process. It is known that for the constraints defined in (3) or (4), two detectors measure projections of the launched signals onto linear polarizations separated by a spatial angle of $\theta$. This spatial angular constraint is identical to a constraint on the angle between the Stokes vectors for the two linear polarizations. Thus each detector measures a projection onto a given Stokes vector, where elements $S_1$, $S_2$ and $S_3$ of these two vectors form two three-dimensional vectors that exhibit an angle of $2\theta$ with respect to each other; or (5) power is measured for each incoming signal and used during the fitting routine to create the calibration matrix. These constraints are considered to be exemplary; others may be utilized to create a unique solution for the calibration matrix.

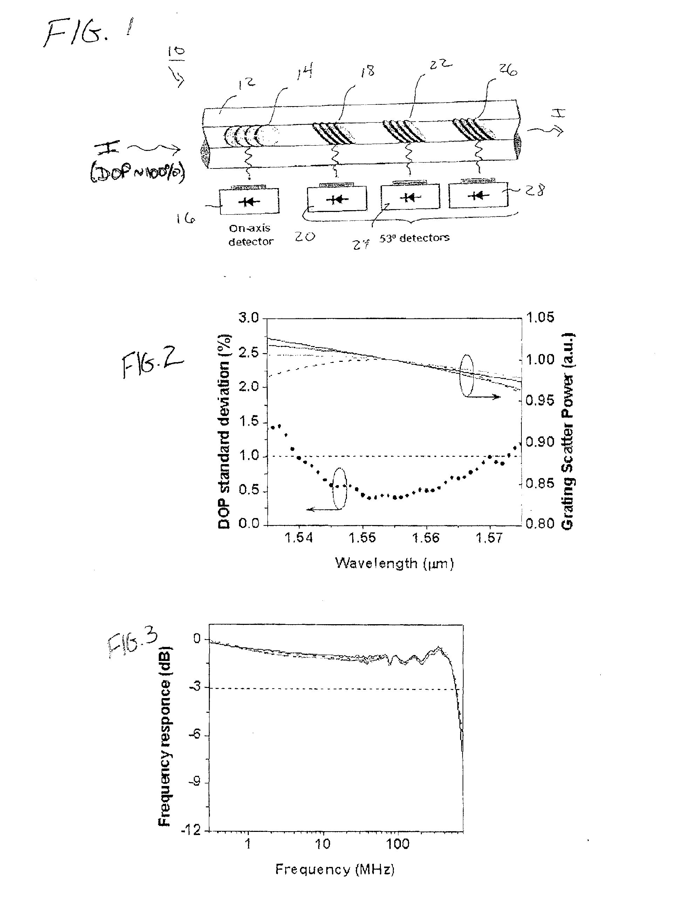

Polarimeter 10 as illustrated in FIG. 1 is used in the following discussion to illustrate the self-calibration technique of the present invention, according to an embodiment of the present invention. However, it is to be understood that the technique is not limited to use with only this arrangement, but finds use with virtually any polarimeter design. Reviewing the elements of polarimeter 10, it is seen to comprise an optical fiber 12 within which a set of four separate gratings has been formed (i.e., "written"). These four gratings are utilized to assist in determining the four Stokes parameters from the four measured detector values.

In order to arrive at a unique solution for the calibration matrix, an input optical signal I may be constrained (alternatively, and as discussed below, the detectors themselves may be disposed in a constrained configuration). Referring back to the case of imposing a constraint on the input optical signal, one exemplary constraint is to require each input signal to exhibit a DOP=100% (as discussed below, this is readily obtained by using a polarized input source that creates narrow linewidth output signals).

Referring to FIG. 1, a first grating 14 is shown as being an "on-axis" grating, that is, it scatters light in the direction of one of the two birefringent axes of the fiber and thus measures the Stokes projection of the light onto one of the two Stokes vectors defining the birefringent axes of the fiber, and thereafter directs a portion of the signal 1 into a first photodetector 16, creating a first detector electrical output signal $D_0$. The remaining portion of optical signal 1 continues to propagate along optical fiber 12 and next encounters a second grating 18 (this oriented off-axis by, for example, 53˚) which directs a second portion of signal I into a second photodetector 20, creating signal $D_1$. The process continues, with a third grating 22 (oriented another 53˚ off-axis relative to grating 18) directing a portion of the optical signal into a third photodetector 24 (creating signal $D_2$), and a final grating 26 (oriented off-axis with respect to grating 22) and photodetector 28 used to create the fourth detector output signal $D_3$. The selection of 53˚ is a design choice, yielding an optimal orientation of the projection states. However, it is to be understood that other grating orientations may be used and are considered to fall within the scope of the present invention.

It has been found that if the set of four detectors 16, 20, 24 and 28 are matched in terms of performance characteristics, a broader calibration bandwidth can be achieved. The matching is generally in terms of characteristics such as responsivity and polarization optics (e.g., waveplates, birefringent fiber, polarizers and the like) and is preferably designed to be matched over a range of optical wavelengths, or electrical frequency, or operating temperature, etc. FIG 2 contains plots of both the DOP and grating scatter power as a function of wavelength for a set of four matched detectors, illustrating a calibration bandwidth of approximately 33 nm. The resultant RF bandwidth is also increased over previous conventional polarimeters, as shown in FIG. 3, which contains the plots of the normalized frequency response (shown as exceeding 500 MHz) for a set of four matched detectors in the polarimeter of FIG. 1. As can also be seen in the plots of FIG. 3, the RF responses are matched up to the cutoff frequency, providing improved accuracy for measurements of high speed polarization changes up to the cutoff frequency.

As discussed above, these four detectors 16, 20, 24 and 28 require a 4x4 calibration matrix C to relate their respective voltage output signals ($D_0$, $D_1$, $D_2$, $D_3$) to the four Stokes parameters that define the SOP of a propagating optical signal 1. According to a known method, a "four point" calibration procedure can be used to create this matrix, where four known and non-degenerate states of polarization are launched into the polarimeter and the detector values recorded. A simple matrix inversion then yields the calibration matrix. While this procedure is very efficient, it requires the generation of accurate reference measurements of the SOPs, which is often not practical.

Embodiments of the present invention provide self-calibration procedures that do not require the use of any "reference signals", relying instead on measured data from the polarimeter itself and analyze the data with respect to one or more constraints, as discussed below. The procedure, in one embodiment, involves a four-step process: (1) launching at least four signals into an optical polarimeter and recording the measured detector values, as well as the total launched power of each signal; (2) creating an approximate calibration matrix; (3) adjusting the first row of the approximate calibration matrix to fit the measured total power values for each launched signal (inasmuch as the first row of the matrix is associated with total power, it is always this first row that is adjusted as the process is employed); and (4) adjusting the remaining elements of the calibration matrix to satisfy a predetermined constraint. The second step may use a set of initially measured detector values, or an "ideal guess" of values. The third step in the procedure can use measured powers or, if the power was known to be constant, can use constant power values. During the fourth step, the remaining elements of the calibration matrix are adjusted to satisfy a predetermined constraint (for example, to maintain a predetermined DOP for each signal (e.g., DOP=100%)).

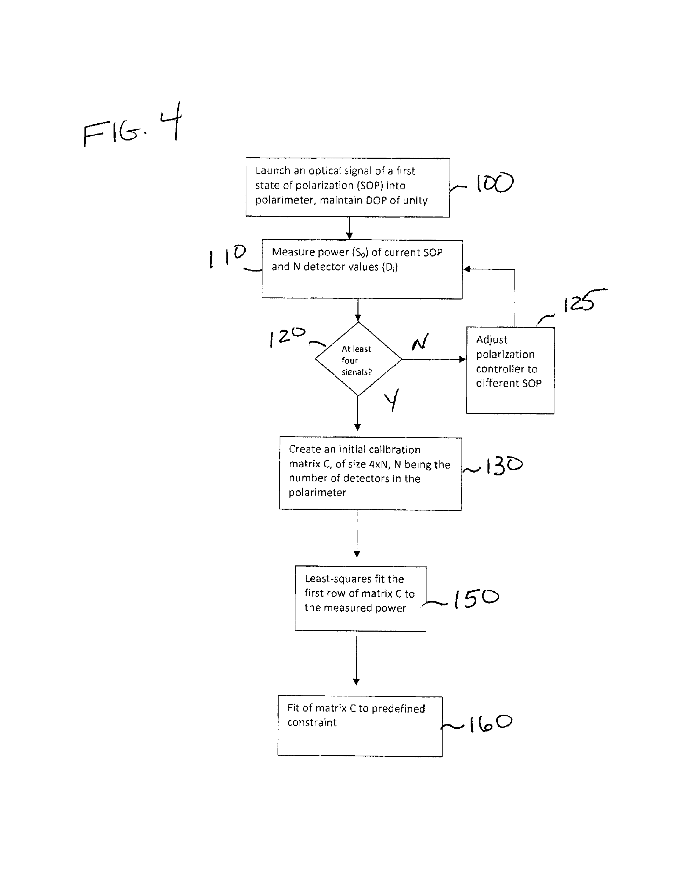

The flowchart of FIG. 4 describes a self-calibration process in accordance with one embodiment of the present invention, utilizing a constraint that the source is a polarized laser with a DOP of (approximately) unity value (i.e., DOP=100%). Single frequency lasers can maintain this condition over long lengths, allowing for this constraint to be robust and transportable — providing for "field" calibration of a polarimeter. A polarization controller is also required for the process and, if there is significant polarization dependent loss (PDL), power measurements need to be made.

The self-calibration data is taken by first moving the polarization controller to allow for the launch of several (possibly random) and possibly unknown SOPs and then recording the detector values for each launch condition. Referring to FIG. 4, this is shown by first launching a signal of a first SOP to the polarimeter (step 100), then measuring the electrical signals at the set ofN detectors (for example, four detectors) disposed along the polarimeter (step 110). In one embodiment, the launched power is also measured for this current SOP. A check is then made (step 120) to determine if a sufficient number of SOPs have been transmitted through the polarimeter for a sufficiently accurate calibration (at least four such measurements are required, more are desirable). If the answer is "no", the polarization controller adjusts the SOP to a different value (step 125) and the measurement process of step 110 is repeated.

Once a sufficient number of SOPs has been launched and the associated detector voltage values (and, perhaps, power levels) have been recorded, the process continues with the creation of the calibration matrix. This is shown as step 130 in FIG. 4. At this point, an initial, approximate calibration matrix is formed using the recorded detector values (or, alternatively, an ideal set of values). The first row of the calibration matrix is then adjusted, as defined in step 150, using an acceptable "best fit" methodology, such as a least squares fit. If the power was constant during the calibration procedure, then the first row is fit to a constant power. In this case, the absolute power in the detector would not be known since the only constraint would be that the power was constant. Alternatively, if the power was measured, the first row is fit to the measured values. It is to be noted that it is always the first row of the calibration matrix that is first adjusted, since the total power is a constraint on the fit of the remaining parameters in the calibration matrix.

Next, the remaining elements of the calibration matrix are adjusted (step 160) so that the particular constraint being employed (in this case, DOP=100%) is maintained for each SOP. An acceptable first "guess" for these remaining elements is to scale them using the values in the first row. Accuracy can be increased, as will be discussed in detail below, by launching more SOPs or including more detectors in the polarimeter.

It is to be noted that the self-calibration procedure of the present invention does not require any *a priori* knowledge of the input SOPs, but only requires that the chosen constraint (e.g., DOP is essentially 100% for each SOP) is maintained.

The following describes each of these steps in detail:

### 1. Launch at least four different, random polarization states through the polarimeter

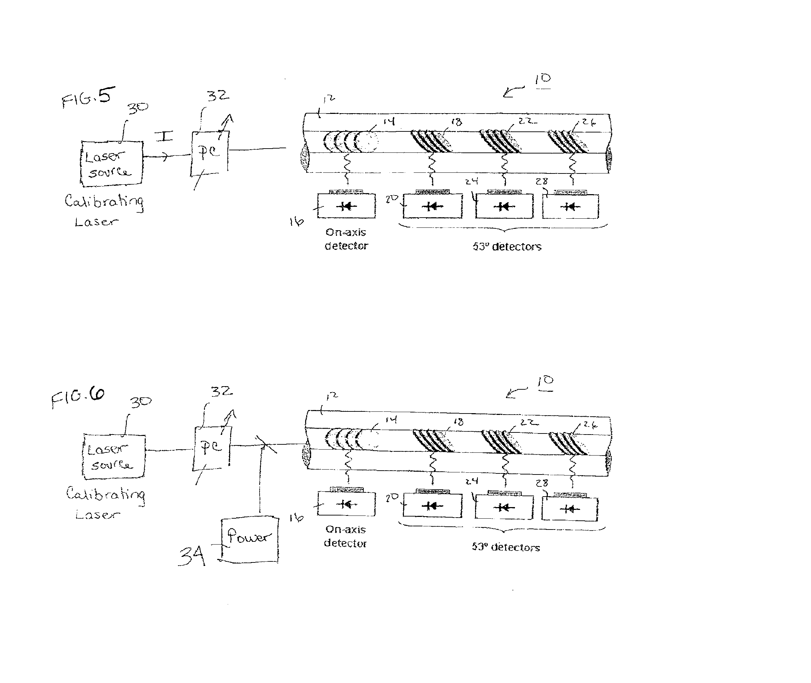

FIG. 5 illustrates an exemplary arrangement for accomplishing this procedure, including a laser source 30 for providing a relatively narrow linewidth polarized input optical signal 1, which than passes through a polarization controller 32 (an adjustable device) before passing through polarimeter 10. By adjusting the "state" of polarization controller 32, the input SOP of signal 1 is controlled and the detector values used in the initial guess (if desired) and the calibration matrix are measured. In order to create the calibration data, polarization controller 32 is adjusted at least three separate times to create at least four different SOPs for the input signal launched into polarimeter 10.

### 2. Generate a "first guess" for calibration matrix C

An initial guess for calibration matrix C is then created. It is to be noted that this initial guess may be refined by a rescaling at a later point in the process (see step 4, below), but the bulk of the computation may be done at this step. Two possible methods are outlined in the section, which begins with an analysis of the calibration matrix C that is useful in determining an initial guess, yielding a "model" calibration matrix. Following this, the initial guess for the calibration procedure is derived using the model calibration matrix.

To derive the model calibration matrix, it is noted that, as mentioned above, the calibration matrix C is defined as the linear transformation that links the measured detector values D to the Stokes vector S of the light:

$$S = CD \tag{1}$$

As discussed above with reference to FIG. 1, this relation can be expressed as follows for an embodiment using a set of four detectors (written in full matrix notation):

$$\begin{bmatrix} S_0 \\ S_1 \\ S_2 \\ S_3 \end{bmatrix} = \begin{bmatrix} C_{00} & C_{01} & C_{02} & C_{03} \\ C_{10} & C_{11} & C_{12} & C_{13} \\ C_{20} & C_{21} & C_{22} & C_{23} \\ C_{30} & C_{31} & C_{32} & C_{33} \end{bmatrix} \begin{bmatrix} D_0 \\ D_1 \\ D_2 \\ D_3 \end{bmatrix} \tag{2},$$

where $C_{ij}$ are the calibration matrix values. Since the polarimeter will provide the four detector values as an output, the vector D is known. A clearer understanding of the calibration matrix C and a derivation of the model calibration matrix can be obtained by considering the inverse of the calibration matrix: $P=C^{-1}$. Writing this out in full matrix notation:

$$
\begin{bmatrix} D_0 \\ D_1 \\ D_2 \\ D_3 \end{bmatrix} = \begin{bmatrix} P_{00} & P_{01} & P_{02} & P_{03} \\ P_{10} & P_{11} & P_{12} & P_{13} \\ P_{20} & P_{21} & P_{22} & P_{23} \\ P_{30} & P_{31} & P_{32} & P_{33} \end{bmatrix} \begin{bmatrix} S_0 \\ S_1 \\ S_2 \\ S_3 \end{bmatrix} \tag{3}
$$

From equation (3) is clear that rows of inverse calibration matrix P can be interpreted as Stokes vectors and the detector values can be interpreted as the corresponding projections in Stokes space. That is,

$$
D_i = P_{i0}S_0 + P_{i1}S_1 + P_{i2}S_2 + P_{i3}S_3 \tag{4}
$$

With this interpretation, P can be rewritten using physically interpretable parameters:

$$
D_i = P_{i0}S_0 + P_{i1}S_1 + P_{i2}S_2 + P_{i3}S_3 = g_i \left\{ S_0 + \eta_i \left[ p_{i1}S_1 + p_{i2}S_2 + p_{i3}S_3 \right] \right\} \tag{5}
$$

where $g_i$ is the gain relating the optical power to the detector voltage, $\eta_i$ (which is taken as positive) is related to the ratio of the minimum and maximum values that $D_i$ takes on as the input polarization state is varied, and $\hat{p}_i = [p_{i1}\ p_{i2}\ p_{i3}]$ is a unit Stokes vector on the Poincare sphere.

For the purposes of the present invention, the vector $\hat{p}_i$ is defined as the projection vector (or projection state) for detector i. In effect, each detector measures the projection of the input polarization state onto its projection vector. When the input polarization is aligned with its projection vector, the detector value is either minimized or maximized and the Stokes projection in equation (5) can be simply expressed in terms of the signal's degree of polarization (DOP) as defined above, yielding the following:

$$
\begin{aligned}
D_{i\,max} &= g_i S_0 \left\{ 1 + \eta_i DOP \right\} \\
D_{i\,min} &= g_i S_0 \left\{ 1 - \eta_i DOP \right\}
\end{aligned} \tag{6}
$$

It is to be noted that the four parameters $P_{ij}$ j=0,1,2,3, have been replaced by four other parameters, $g_1$, $\eta_i$, and $p_{1j}$. The only constraints on these parameters are that $0 < \eta_i < 1$ and that the projection state is a unit vector. The possible negative values for $\eta_i$ are instead associated with the direction of p, and the $\eta_i$ value must be less than one since D must be a positive number (with reference to equation (6) above for $D_{i\,min}$)

In matrix form, therefore, the "model" inverse calibration matrix $P^m$ can be expressed as follows:

$$
\begin{bmatrix} D_0 \\ D_1 \\ D_2 \\ D_3 \end{bmatrix} = P^m \begin{bmatrix} S_0 \\ S_1 \\ S_2 \\ S_3 \end{bmatrix} = \begin{bmatrix} g_0 \begin{bmatrix} 1 & \eta_0 \hat{p}_0 \end{bmatrix} \\ g_1 \begin{bmatrix} 1 & \eta_1 \hat{p}_1 \end{bmatrix} \\ g_2 \begin{bmatrix} 1 & \eta_2 \hat{p}_2 \end{bmatrix} \\ g_3 \begin{bmatrix} 1 & \eta_3 \hat{p}_3 \end{bmatrix} \end{bmatrix} \begin{bmatrix} S_0 \\ S_1 \\ S_2 \\ S_3 \end{bmatrix} \tag{7}
$$

The parameter values defining $P^m$ can be extracted from measurements of the minimum and maximum values of the detector values as well as the values of the other detectors when another detector is at a min or max. Alternatively, if a random set of polarizations has been launched into the polarimeter, the minimum and maximum values may be estimated by taking the minimum and maximum detector values from among the random launched signals. The result is two 4x4 matrices, $D^{max}$ and $D^{min}$:

$$D^{max} = \begin{bmatrix} D^{max}_{00} & D^{max}_{01} & D^{max}_{02} & D^{max}_{03} \\ D^{max}_{10} & D^{max}_{11} & D^{max}_{12} & D^{max}_{13} \\ D^{max}_{20} & D^{max}_{21} & D^{max}_{22} & D^{max}_{23} \\ D^{max}_{30} & D^{max}_{31} & D^{max}_{32} & D^{max}_{33} \end{bmatrix}$$

$$D^{min} = \begin{bmatrix} D^{min}_{00} & D^{min}_{01} & D^{min}_{02} & D^{min}_{03} \\ D^{min}_{10} & D^{min}_{11} & D^{min}_{12} & D^{min}_{13} \\ D^{min}_{20} & D^{min}_{21} & D^{min}_{22} & D^{min}_{23} \\ D^{min}_{30} & D^{min}_{31} & D^{min}_{32} & D^{min}_{33} \end{bmatrix}$$

(8)

Thus $D^{max}_{00}$ is the maximum value of $D_0$, while $D^{max}_{01}$ is the value of $D_1$ when $D_0$ is maximized, and vice versa. It is to be noted that each column is formed by the four detector values measured when detector $i$ is maximized or minimized. When random states are launched, then the minimum and maximum is taken over all of the random states and represents only an estimate of the actual minimum and maximum values. Thus, with random and unknown polarization states, only an estimate of the calibration matrix can be achieved, using the model calibration matrix of equation (7).

The parameters of the model inverse calibration matrix (or the approximations thereof) can then be derived from $D^{max}$ and $D^{min}$ (or their approximately values). For these calculations, $S_0$ is defined as 1, since the overall power does not affect the computation. The parameters $g_i$ and $\eta_i$ can be written in terms of the ratio of minimum to maximum power, where $r_i$ is the ratio parameter defined as follows:

$$r_i = \frac{D^{min}_{ii}}{D^{max}_{ii}}$$

(9),

and the parameters $\eta_i$ and $g_i$ are expressed as:

$$\eta_i = \frac{1 - r_i}{1 + r_i},$$

(10)

and

$$g_i = \frac{D^{max}_{ii}}{S_0} \frac{(1 + r_i)}{2}$$

(11)

The off-diagonal elements of $D^{max}$ and $D^{min}$ are related to the cosine of the angles between the different principal states, that is:

$$D^{\text{max}}{}_{ij} = g_i S_0 \left( 1 + \eta_i c_{ij} \right) \tag{12}$$

where

$$c_{ij} = \hat{p}_i \cdot \hat{p}_j = \cos\left(\theta_{ij}\right) \tag{13}$$

for $i \neq j$
and therefore

$$c_{ij} = \left[ \frac{D^{\text{max}}{}_{ij}}{S_0 g_i} - 1 \right] \frac{1}{\eta_i}$$

From these cosines, the projection states may be computed as follows. First:

$$\begin{aligned}
\left[ p_{01} \; p_{02} \; p_{03} \right] &= \left[ 1 \; 0 \; 0 \right] \\
\left[ p_{11} \; p_{12} \; p_{13} \right] &= \left[ \cos\left(\theta_{01}\right) \; \sin\left(\theta_{01}\right) \; 0 \right] = \left[ c_{01} \; s_{01} \; 0 \right]
\end{aligned} \tag{14}$$

where $s_{ij}$ is simply $\sin(\theta_{ij})$. Note that $\theta_{ij}$ is defined between 0 and $\pi$, so the $\sin(\theta_{ij})$ is uniquely determined. This form is allowed since the orientation of the four projection states is arbitrary up to an arbitrary rotation. The remaining two projection states can be written in this form:

$$\begin{aligned}
\left[ p_{21} \; p_{22} \; p_{23} \right] &= \left[ c_{02} \; \cos(\varphi_2)s_{02} \; \sin(\varphi_2)s_{02} \right] \\
\left[ p_{31} \; p_{32} \; p_{33} \right] &= \left[ c_{03} \; \cos(\varphi_3)s_{03} \; \sin(\varphi_3)s_{03} \right]
\end{aligned} \tag{15}$$

The parameters $\varphi_2$ and $\varphi_3$ can be determined from the dot products of $p_2$ and $p_3$ with $p_1$ :

$$\begin{aligned}
p_1 \cdot p_2 &= c_{12} = c_{01}c_{02} + \cos(\varphi_2)s_{01}s_{02} \\
p_1 \cdot p_3 &= c_{31} = c_{01}c_{03} + \cos(\varphi_3)s_{01}s_{03}
\end{aligned} \tag{16}$$

It is to be noted that equation (16) only determines the cosine of $\varphi_2$ and $\varphi_3$. Since these are defined over the range 0 to $2\pi$, the values for sine must also be determined. These can be determined be checking that $c_{23}$ has the correct value.
The model inverse calibration matrix $P^m$ may then be written as:

$$P''' = \begin{bmatrix} g_0[1 \ \eta_0 \hat{p}_0] \\ g_1[1 \ \eta_1 \hat{p}_1] \\ g_2[1 \ \eta_2 \hat{p}_2] \\ g_3[1 \ \eta_3 \hat{p}_3] \end{bmatrix} = \begin{bmatrix} g_0 & g_0\eta_0 & 0 & 0 \\ g_1 & g_1\eta_1 c_{01} & g_1\eta_1 s_{01} & 0 \\ g_2 & g_2\eta_2 c_{02} & g_2\eta_2 s_{02}\cos(\varphi_2) & g_2\eta_2 s_{02}\sin(\varphi_2) \\ g_3 & g_3\eta_3 c_{03} & g_3\eta_3 s_{03}\cos(\varphi_3) & g_3\eta_3 s_{03}\sin(\varphi_3) \end{bmatrix} \qquad (17).$$

The overall gain is arbitrary, so go may be set equal to one. In this case, there remain twelve parameters for consideration: $g_1$, $g_2$, $g_3$, $\eta_0$, $\eta_1$, $\eta_2$, $\eta_3$, $c_{01}$, $c_{02}$, $c_{03}$, $\varphi_2$, and $\varphi_3$. It is to be noted that equation (17) is not the only model inverse calibration matrix possible. However, it is the simplest form of this matrix, since orientation and overall scale factors have been removed. In fact, it will be valid for any four detector polarization sensitive device. The twelve parameters of the model calibration matrix may be used in one or more of the fitting routines described in association with the various embodiments of the present invention.

It is also to be noted that a model inverse calibration matrix may also be computed if there are more than four detectors. In this case, more lines are simply added to equation (16) in the following manner:

$$p_1 \cdot p_2 = c_{12} = c_{01}c_{02} + \cos(\varphi_2)s_{01}s_{02}$$
$$p_1 \cdot p_3 = c_{31} = c_{01}c_{03} + \cos(\varphi_3)s_{01}s_{03}$$
$$\vdots$$
$$p_1 \cdot p_N = c_{N1} = c_{01}c_{0N} + \cos(\varphi_N)s_{01}s_{0N}$$
$$p_2 \cdot p_3 = c_{23} = c_{02}c_{03} + \cos(\varphi_3)s_{02}s_{03}$$
$$\vdots$$
$$p_2 \cdot p_N = c_{N2} = c_{02}c_{0N} + \cos(\varphi_N)s_{02}s_{0N}$$
$$etc$$

$$(16b)$$

The model calibration matrix of equation (17) can be used to produce a first guess of the calibration matrix C as used in the calibration procedure of the present invention. The first guess is obtained by using the minimum and maximum detector values as measured from the launch signals of the first step as outlined in equation (8) above. In general, if the launched polarization states are random, these values will not be the true maxima and minima, so the guess will be an estimate. The more random states that are launched, the more accurate the first guess will be. Alternatively, it is possible to adjust the polarization of the launched signal(s) to maximize and minimize each detector signal.

While the above procedure can extract an initial guess from measured data, it is also possible to use an idealized guess, again using the model calibration matrix analysis described above. This can be accomplished if the orientation of the projection states is known. For example, a useful orientation for the projection states is that they form a tetrahedron. In this case, an initial guess is obtained from the ideal calibration matrix for such a polarimeter. For an ideal tetrahedral polarimeter, the following may therefore be used as a "first guess" for the model inverse calibration matrix:

$$P_{tetrahedral}''' = \begin{bmatrix} 1 & 1 & 0 & 0 \\ 1 & -1/3 & \sqrt{8}/3 & 0 \\ 1 & -1/3 & -\sqrt{2}/3 & \sqrt{6}/3 \\ 1 & -1/3 & -\sqrt{2}/3 & -\sqrt{6}/3 \end{bmatrix} \qquad (18)$$

By tetrahedral polarimeter, it is meant that the projection states form a tetrahedron in Stokes space and that all $g_1=1$ and $\eta_1=1$.

### 3. Fitting the first row of the calibration matrix to actual data

Prior to describing the next two steps in detail, a discussion of the approximate method of utilizing the second step and fitting the entire calibration matrix C to DOP=1 follows. This discussion then leads to the embodiment described above with the third step (first row fit to power) and the fourth step (adjusting the remaining matrix elements to DOP or another constraint). Initial guesses are given for both steps, derived either from the data or from ideal guesses.

While equation (17) may be technically accurate, in practice factors such as noise can easily make the twelve parameters deviate from the correct values. Equation (17) is obtained through the eight measurements of the minima and maxima of the detector values. If these are incorrect by small amounts, then the model calibration matrix can easily be off by a large amount. Therefore, another refinement is useful to ensure an accurate calibration. To perform this refinement, a standard reference for polarization measurement is required. One possibility is to launch certain polarization states such as linear and circular. This can be done with great accuracy; however, such a polarization state can degrade in the propagation path to the polarimeter as a result of intervening birefringence and polarization dependent loss (PDL).

A more robust standard (than generating known polarization states) uses quantities that remain relatively invariant during propagation to the polarimeter. There are at least two possible choices: (1) $S_0$ and (2) DOP. For present purposes, the DOP is first selected, and is controlled to be very close to one (i.e., 100% for all signals) by using narrow linewidth sources, high quality polarizers and filtering out all amplified spontaneous emission (ASE). Indeed, the DOP can remain very close to unity if the light source is narrowband and low noise, even when propagating through long lengths of fiber (e.g., > 100m) with polarization dependent delay and loss (or gain).

If these conditions are met, then the signal will have DOP=1 for any SOP. Therefore, if a set of polarizations is launched into the polarimeter, it can be assumed that DOP=1 for all of the SOPs. It is to be noted that it is not necessary to know the SOP itself during this optimization. In fact, there can be a significant change in polarization during propagation to the polarimeter, but as long as the DOP=1 for all SOPs, the fitting routine (optimization) can still be performed.

In accordance with one embodiment of the present invention, the optimization is simply a fit of all of the measured DOPs to DOP=1 (it is to be understood that other types of "fit" may be used, a least squares fit being considered as exemplary only). In the fit, a measure Q is defined that is to be minimized. In this case, the DOP is defined to be as close as possible to unity for all N measured SOPs:

$$Q = \sum_{n=1}^{N} \left( S_{1n}^{2} + S_{2n}^{2} + S_{3n}^{2} - S_{0n}^{2} \right)^{2} \tag{26}$$

As mentioned above, the SOP values are not known. What is known are the measured detector values $D_0$, $D_1$, $D_2$ and $D_3$. The approximate Stokes vectors are therefore determined by taking the inverse of the model inverse calibration matrix to find the calibration matrix ($C^m = (P^m)^{-1}$):

$$S_{in} = \sum_{j=0}^{3} C_{ij}^{\,m} D_{jn} \tag{27}$$

At this stage, various parameters in the model may be chosen. The simplest parameters to choose are the model calibration parameters as defined above in equation (17). The quantity that must be minimized then is defined by equations (17), (26), and (27), which are rewritten here for completeness:

$$Q(g_1, g_2, g_3, \eta_0, \eta_1, \eta_2, \eta_3, c_{01}, c_{02}, c_{03}, \varphi_2, \varphi_3) = \sum_{n=1}^{N} \left( S_{1n}^{2} + S_{2n}^{2} + S_{3n}^{2} - S_{0n}^{2} \right)^{2}$$

$$S_{in} = \sum_{j=0}^{3} C_{ij}^{\,m} D_{jn} \tag{28}$$

$$C^{m} = \left(P^{m}\right)^{-1} = \begin{bmatrix} 1 & \eta_0 & 0 & 0 \\ g_1 & g_1\eta_1 c_{01} & g_1\eta_1 s_{01} & 0 \\ g_2 & g_2\eta_2 c_{02} & g_2\eta_2 s_{02}\cos(\varphi_2) & g_2\eta_2 s_{02}\sin(\varphi_2) \\ g_3 & g_3\eta_3 c_{03} & g_3\eta_3 s_{03}\cos(\varphi_3) & g_3\eta_3 s_{03}\sin(\varphi_3) \end{bmatrix}^{-1}$$

As stated above in section 2 and in accordance with one embodiment of the self-calibration procedure of the present invention, the set of measurements $D_m$ is first used to provide an approximate first guess using the model calibration matrix $C^m$. Alternatively, the first guess may be determined by an ideal matrix, such as that shown above in equation (18). In either case, this matrix is used as the first guess in the nonlinear least squares fit of equation (28). It is to be noted that the first guess can be quite inaccurate and still allow for convergence. It is to be noted that the model only depends on the relative gains, so the overall gain can be removed. After optimization, an appropriate scaling factor can be added into adjust the units of $S_0$ correctly.

While the procedure leading to equation (28) yields a calibration matrix, it can suffer from a significant source of error. In fact, if DOP=1, there are many values of C that satisfy the minimization procedure; the solution is not unique. All of these solutions are related by polarization dependent loss (PDL) transformations. In particular, the introduction of PDL between the calibrating laser source and the polarimeter will not change the condition that DOP=1 for all SOPs. Thus, for any solution of the calibration matrix C to the optimization procedure, the matrix $R_{PDL}C$ is also a solution. Here $R_{PDL}$ is a Mueller matrix representing an element with PDL along an arbitrary Stokes axis.

In order to remove this degeneracy, another constraint is imposed using the measured data. In one embodiment, power measurements are used to address this issue. In particular, the power of each input signal is measured at some point along the path between the calibrating laser and the polarimeter, or at some point after or before either element. It is best to measure the power after the polarization controller that is generating the different polarization states. FIG. 6 illustrates this embodiment, where a power meter 34 is inserted to measure the power at the output of polarization controller 32. This power measurement point is then the reference point for the PDL. In contrast to the specific embodiment shown in FIG. 6, it is to be noted that power meter 34 may also be placed beyond the output side of the polarimeter.

In an alternative embodiment, the power measurement may be incorporated within the polarimeter itself. For example, two of the gratings forming the polarimeter may be oriented at 90° with respect to each other such that the same scattering strength yields a detector voltage proportional to the power ($S_0$) in the fiber.

Given this additional power requirement to be associated with the calibration procedure, a different fitting routine is employed. The first requirement is to fit the first row of the calibration matrix C to the power measurements (defined as "step 3" in the above discussion). Note first that the polarimeter power measurements depend only on the elements of the first row of the calibration matrix. From equation (2) it is found that:

$$S_0 = \sum_{i=0}^{3} C_{0i} D_i \tag{29}$$

These values may then be fit to a given set of measured powers $S_{01}^{(m)}$. A simple least squares measure requires minimization of:

$$Q = \sum_{j}\left(S_{0j} - S_{0j}^{(m)}\right)^2 = \sum_{j}\left(\sum_{i=0}^{3} C_{0i} D_{ij} - S_{0j}^{(m)}\right)^2 \tag{30},$$

where j is summed over all $N_{data}$ data points. The minimization is reached when:

$$\frac{dQ}{dC_{0k}} = 0 \tag{31}$$

This yields:

$$\sum_j 2D_{kj}\left(\sum_{i=0}^{3} C_{0i}D_{ij} - S_{0j}{}^{(m)}\right) = 0$$

$$\sum_{i=0}^{3} C_{0i}\left(\sum_j D_{kj}D_{ij}\right) = \sum_j D_{kj}S_{0j}{}^{(m)}$$

$$\sum_{i=0}^{3} Z_{ki}C_{0i} = X_k$$

$$Z_{ki} = \sum_{j=1}^{N_{data}} D_{kj}D_{ij}$$

$$X_k = \sum_{j=1}^{N_{data}} D_{kj}S_{0j}{}^{(m)}$$

where Z and X are a matrix and vector, respectively, that depend on the input data and $N_{data}$ is the number of data points. The set of relations forming equations (32) can be solved by simply inverting Z. Note that this solution can also be extended to a polarimeter with more than four detectors.

### 4. Fitting the remaining elements of the calibration matrix to a constraint on the data

At this stage, the process of "step 4" is described, that is, the process of fitting the remaining elements of the calibration matrix. To begin this particular process, the first row of calibration matrix C is now best fit to the power data, and a first guess for the remaining elements is obtained (derived from the initial guess obtained in step 2, as discussed above). Thus, this first guess can simply be the model calibration matrix shown in equation (17) using the detector data, or an ideal guess (such as equation (18) if the polarimeter is known to be close to tetrahedral).

As discussed above, one additional step is required to obtain the correct first guess for the remaining parameters of calibration matrix C - the rescaling of the initial guess matrix. Indeed, the initial guess matrix will have a first row that is different from the best fit value using the measured powers. This is due to the fact that the gains are not set correctly. Therefore, this first row must be replaced by the "best fit" first row. To adjust the guess represented by the other three rows, these may be scaled by a single factor to make them closer to the scaled values in the best fit first row. This can be accomplished by simply taking the average scale factor of the first row and dividing all other elements. In brief, the guess matrix is then:

$$C^{guess} = \begin{bmatrix} C_{00}{}^f & C_{01}{}^f & C_{02}{}^f & C_{03}{}^f \\ hC_{10}{}^m & hC_{11}{}^m & hC_{12}{}^m & hC_{13}{}^m \\ hC_{20}{}^m & hC_{21}{}^m & hC_{22}{}^m & hC_{23}{}^m \\ hC_{30}{}^m & hC_{31}{}^m & hC_{32}{}^m & hC_{33}{}^m \end{bmatrix} \tag{33},$$

where $C^f$ is the best fit first row from the measured powers, $C^m$ is the model matrix derived from equation (17) (or the ideal model of equation (18)), and h is a scale factor derived from the ratio of the first rows of the two matrices:

$$h = \frac{1}{4}\sum_{i=0}^{3}\frac{C_{0i}{}^{f}}{C_{0i}{}^{m}}$$ (34)

It is to be noted that this is not the only scaling. In fact, in general, the following form of the model calibration matrix $C^m$ can be used:

$$C^m = \begin{bmatrix} [1\ \eta_0\hat{p}_0] \\ [1\ \eta_1\hat{p}_1] \\ [1\ \eta_2\hat{p}_2] \\ [1\ \eta_3\hat{p}_3] \end{bmatrix}^{-1} \begin{bmatrix} g_0{}^{-1} & 0 & 0 & 0 \\ 0 & g_1{}^{-1} & 0 & 0 \\ 0 & 0 & g_2{}^{-1} & 0 \\ 0 & 0 & 0 & g_3{}^{-1} \end{bmatrix}$$

Since the gains $g_1$ are easily related to the first row of C, this form of C can be used to scale the first guess on a column-by-column basis. For instance, in the case of a tetrahedral guess, the following scaled tetrahedral guess is utilized:

$$C_{scaled\ tetrahedral}{}^{guess} = \frac{1}{4}\begin{bmatrix} 1 & 1 & 1 & 1 \\ 3 & -1 & -1 & -1 \\ 0 & 2\sqrt{2} & -\sqrt{2} & -\sqrt{2} \\ 0 & 0 & \sqrt{6} & -\sqrt{6} \end{bmatrix}\begin{bmatrix} 4C_{00} & 0 & 0 & 0 \\ 0 & 4C_{01} & 0 & 0 \\ 0 & 0 & 4C_{02} & 0 \\ 0 & 0 & 0 & 4C_{03} \end{bmatrix}$$

It is also important to note that rotations of model matrix $C^m$ do not affect the first row of calibration matrix C. Only PDL transformations of the signals (i.e., polarization transformations that change the value of $S_0$ or the total power as function of the input polarization) will affect these values. Therefore, the orientation of P in equation (17) (or equation (18)) is not important. However, the PDL associated with model matrix $C^m$ is important and can skew the initial guess. It is also noted that the fit to the measured powers locks in a particular PDL value for calibration matrix C. Therefore, the PDL will not vary in the subsequent optimization of the other parameters.

At this stage, the optimization of the remaining elements of calibration matrix C proceeds as follows. First, equation (28) can be restated as follows for this new optimization:

$$Q\left(C_{10}{}^{f},C_{11}{}^{f},C_{12}{}^{f},C_{13}{}^{f},C_{20}{}^{f},C_{21}{}^{f},C_{22}{}^{f},C_{23}{}^{f},C_{30}{}^{f},C_{31}{}^{f},C_{32}{}^{f},C_{33}{}^{f}\right) = \sum_{n=1}^{N_{data}}\left(S_{1n}{}^{2} + S_{2n}{}^{2} + S_{3n}{}^{2} - S_{0n}{}^{2}\right)^{2}$$

$$S_{jn} = \sum_{i=0}^{3}C_{ij}{}^{f}D_{jn}$$

(35)

The optimization is then performed subject to the constraint that the first row of calibration matrix C is fixed. Q can also be normalized to the total power at each data point, $S_{0n}$. Any standard optimization procedure may be used, such as Levenberg-Marquardt or trust-Region methods. Note that this optimization also has many minima, since a Stokes rotation R with PDL=0 gives the same DOP=1 condition, that is, the matrices C and RC yield the same solution. Thus, the orientation of the fit from equation (35) will be arbitrary. In practice, however, once the best fit is achieved, Q does not change at all under any of the three rotations, so the optimization terminates. This is so because the DOP metric is completely unchanged under such rotations, making Q exactly the same. It is to be noted that the created calibration matrix will be oriented in an arbitrary manner and may then be re-oriented to a desired orientation using a Stokes rotation, as described below, without changing the accuracy of the calibration.

While power measurements are often easy to add to a calibration, it would be useful to have a calibration procedure that does not rely on them. It is to be noted that if the power is constant during the above-described calibration procedure, then it is not necessary to measure the power. The power fit of the first row of calibration C can simply be set to an arbitrary constant value. The overall scale factor for absolute power must be added later. While this calibration method is quite desirable, there is still the possibility that power might vary during calibration for other reasons and when measuring the power for each launched polarization, these power variations are naturally accounted for. In situations where no power measurements are made, other constraints must be added to the fitting procedure that determines calibration matrix C.

Recall that a power measurement was necessary to adjust the PDL correctly for the particular reference point. If no power measurement is used, then some other constraint must be added to assure that the PDL is correctly adjusted. This constraint can be attained by forcing the test polarizations to have a fixed Stokes space angle with respect to each other. For instance, if two orthogonally polarized states are launched, then only the correctly calibrated PDL will give a calibration matrix C that maintains its orthogonality. If the input polarizations are comprised of orthogonal pairs, then a calibration may be obtained. It is to be noted that any predetermined Stokes angle among the inputs is sufficient, where this constraint may be added to Q as defined in equation (35) so that both DOP=1 and the Stokes angular constraints are satisfied.

It is also to be noted that a different fitting procedure may be used with the DOP constraint, or any other set of constraints such as DOP and Stokes angle. In particular, DOP=1 is no longer used as the quantity to be minimized. Instead, calibration matrix C is varied to minimize a parameter that depends on how closely the constraints are met. This alternative fitting procedure is next described below, using the example of a DOP and Stokes space angular constraint.

When DOP=1, there is a constraint on the four detector values measured by the polarimeter. Put another way, the Stokes vector may be computed in two different ways: 1) using the calibration matrix, and 2) using the calibration matrix and the DOP=1 condition. Therefore, the Stokes vector is first computed from the calibration matrix, $S^c$ :

$$S^c_{0n} = \sum_{j=0}^{3} C_{0j} D_{jn}$$

$$S^c_{1n} = \sum_{j=0}^{3} C_{1j} D_{jn}$$

$$S^c_{2n} = \sum_{j=0}^{3} C_{2j} D_{jn} \qquad (36)$$

$$S^c_{3n} = \sum_{j=0}^{3} C_{3j} D_{jn}$$

The Stokes vector is then recomputed using $S^c$ and the DOP=1 condition:

$$S^d_{0n} = \sqrt{S^c_{1n}{}^2 + S^c_{2n}{}^2 + S^c_{3n}{}^2}$$

$$S^d_{1n} = \pm\sqrt{S^c_{0n}{}^2 - S^c_{2n}{}^2 - S^c_{3n}{}^2}$$

$$S^d_{2n} = \pm\sqrt{S^c_{0n}{}^2 - S^c_{1n}{}^2 - S^c_{3n}{}^2} \qquad (37),$$

$$S^d_{3n} = \pm\sqrt{S^c_{0n}{}^2 - S^c_{1n}{}^2 - S^c_{2n}{}^2}$$

where this solution is defined as $S^d$. It is to be noted that there are two solutions for $S^d_{1n}$, $S^d_{2n}$, and $S^d_{3n}$, since these

can be both positive and negative. There is only one solution for $S^d_{0n}$, since this is defined as positive. If the calibration matrix is correct, then the $S^c$ and $S^d$ solutions will be the same. Therefore, the procedure is to vary calibration matrix C to minimize the difference between these two solutions. For example, the following can be minimized:

$$Q = \sum_{n=1}^{N_{state}} \sum_{i=0}^{3} \left| \frac{S^c_{in} - S^d_{in}}{\left(S^c_{0n} + S^d_{0n}\right)/2} \right|^2 \qquad (38).$$

Here, the Stokes vectors are normalized to the average value of $S_0$. It is to be noted that it is necessary to first pick the solution for $S^d$ which is closest to $S^c$ for the $S^d_{1n}$, $S^d_{2n}$, and $S^d_{3n}$ components. Only then is the sum for Q performed.

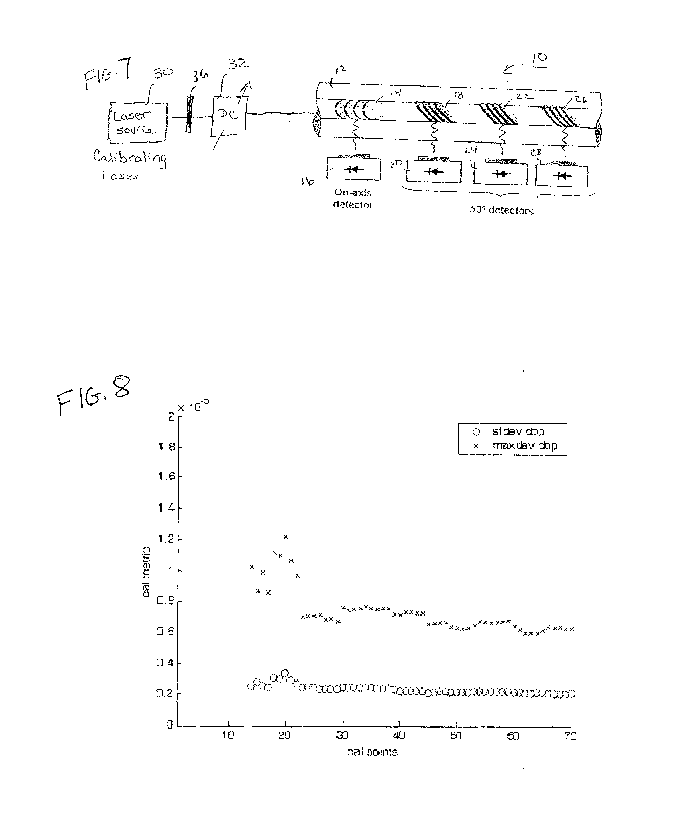

However, as stated above, this minimization procedure has many solutions. If C is a solution, then $R_{PDL}C$ will also be a solution. As previously noted, $R_{PDL}$ is a Mueller matrix with PDL along an arbitrary axis. To break this degeneracy, polarization states are launched that have some known relationship. The simplest relationship is pairwise orthogonality. That is, each pair of states is orthogonal. This can be achieved by passing the light through a linear polarizer 36 and then through a polarization controller 32 have a PDL fixed as a function of the control state, as shown in FIG. 7. Note that the power can be different for the different launch states, and it does not need to be measured. There can also be PDL between the polarization converter and the polarimeter. The only requirement is that this PDL is not varying.

The constraint of orthogonality can then be included in the minimization quantity, Q, as follows:

$$Q = \sum_{n=1}^{N} \sum_{i=0}^{3} \left| \frac{S^c_{in} - S^d_{in}}{\left(S^c_{0n} + S^d_{0n}\right)/2} \right|^2 + \zeta \sum_{n=1,3,5,}^{N-1} \left| \sigma^c_n \cdot \sigma^c_{n+1} \right| \qquad (39),$$

where the parameter $\zeta$ may be set different from 1 in order to weigh the two parts accordingly. Here $\sigma^c_n$ is the normalized version of $S^c_n$ with its zero component set to 1:

$$\sigma^c_n = \left\{ 1, \frac{\left(S^c_{1n}, S^c_{2n}, S^c_{3n}\right)}{\sqrt{S^c_{1n}{}^2 + S^c_{2n}{}^2 + S^c_{3n}{}^2}} \right\} \qquad (40).$$

The second term in equation (39) may also be used with the previously-described expression for Q as found in equations (35) and (28), where this term then imposes the orthogonality constraint in that fit as well.

While constraints may be imposed on the input calibration signals, it is also possible to impose constraints on the detectors and polarization optics in the polarimeter, for example, on the set of N detectors comprising the polarimeter. The simplest constraint is to have two detectors that measure orthogonally polarized light. That is, a selected pair of detectors have projection vectors that point in opposite directions in Stokes space. Such a constraint would break the PDL degeneracy. A given inverse calibration matrix P would no longer have these two states orthogonal when PDL was applied: $P=(R_{PDL}C)^{-1}$. By imposing such a constraint, a local reference for the PDL can be obtained.

Alternatively, more detectors (and more detector measurements) may be added to the polarimeter as another general constraint. Any measurements beyond the first four will over-determine the solution for the Stokes vector. In effect, the Stokes parameters can be computed in more than one manner (as discussed above). For instance, if there are five detectors, then there are five groups of four detectors that can each be used to determine the polarization. The calibration procedure can then proceed by forcing these Stokes parameters to all be the same. The calibration procedure is then similar to that described above. First, an approximate solution is determined using the model calibration matrix. However, there are more detectors and thus more projection states. In this case, therefore, the initial estimate is derived from a model calibration matrix using more than four projection states, as defined in equation 16(b). Second, the Stokes vector is computed using the five different sets of four detectors. In the fit, the parameters to vary would be those of the model calibration matrix of equation (17). If applicable, the constraint that two of the projection states must be orthogonal would be imposed at this stage. Alternatively, a constraint on the extinction parameters $\eta_1$ could be imposed, such as

setting $\eta_i=1$ (perfect extinction). During the subsequent steps in the process these extinction parameters would not be adjusted during the fit, but constrained to remain at the imposed value.

As an example, with five detectors, there would be five different values of the Stokes parameters:

$$S^k{}_{in} = \sum_{j=0, j \neq k}^{4} C_{ij} D_{jn} \qquad (41)$$

The Q to minimize would be:

$$Q = \sum_{n=1}^{N_{data}} \sum_{i=0}^{3} \sum_{k<\ell} \left| \frac{S^k{}_{in} - S^\ell{}_{in}}{(S^k{}_{0n} + S^\ell{}_{0n})/2} \right| \qquad (42)$$

The third sum is over the 10 unique pairs of solutions, selected from the five sets of four detectors (sums over fewer pairs of solutions is also possible). $C^k$ would then be derived by dropping one row from $P^m$, with the updated matrix $P^m$ being defined as follows:

$$P^m = \begin{bmatrix} g_0 & g_0\eta_0 & 0 & 0 \\ g_1 & -g_1\eta_1 & 0 & 0 \\ g_2 & g_2\eta_2 c_{02} & g_2\eta_2 s_{02} & 0 \\ g_3 & g_3\eta_3 c_{03} & g_3\eta_3 s_{03}\cos(\varphi_3) & g_3\eta_3 s_{03}\sin(\varphi_3) \\ g_4 & g_4\eta_4 c_{04} & g_4\eta_4 s_{04}\cos(\varphi_4) & g_4\eta_4 s_{04}\sin(\varphi_4) \end{bmatrix} \qquad (43)$$

with each $C^k$ derived from $P^m$ by excluding row k. For instance:

$$C^4 = inverse \left\{ \begin{bmatrix} g_0 & g_0\eta_0 & 0 & 0 \\ g_1 & -g_1\eta_1 & 0 & 0 \\ g_2 & g_2\eta_2 c_{02} & g_2\eta_2 s_{02} & 0 \\ g_3 & g_3\eta_3 c_{03} & g_3\eta_3 s_{03}\cos(\varphi_3) & g_3\eta_3 s_{03}\sin(\varphi_3) \end{bmatrix} \right\} \qquad (44)$$

This could be further generalized to more detectors simply by adding more rows as previously discussed. For instance, there could be an array of many detectors measuring projections over the entire Poincare sphere.

Knowledge of their relative angles (i.e., of the projection states for each one) could then give a constraint that could be used as another means to determine the calibration for the polarimeter.

FIG. 8 is a plot illustrating the standard deviation (and maximum) of the DOP as a function of the number of points involved in the calibration. As shown, convergence to less than 1 % (for the maximum deviation) is very fast, requiring only 12 to 15 points. Convergence to an asymptotic value (approximately 0.02%) is somewhat slower, requiring about 30 random points.

In another embodiment of the present invention, the entire calibration procedure is performed with a given number of launched signals and if a sufficiently good fit of C to the launched signal data is achieved, no further data points are used. On the other hand, if the fit is still not optimal, then an additional data point is generated. Calibration quality is determined by a given calibration metric. One calibration metric, as shown in FIG. 8, is the standard deviation of the DOP (computed using C and the detector values) computed for all launch signals in the calibration data (the "standard deviation", shown as 'stdev dop' in FIG. 8). Another possible metric is the maximum deviation of the DOP from 100% for all launched signals (shown as 'maxdev' in FIG. 8). In either case, the plots in FIG. 8 show that the calibration metric decreases as the number of points used in the calibration increases. When the metric reaches an acceptable value (for example, standard deviation of DOP=0.3e-3), no further points are taken and the calibration is defined as complete. Alternatively, a given calibration metric may be required to be achieved for several iterations before defining the calibration process as being complete.

Once a calibration has been achieved, it can be used without further modification. However, it is of interest for some applications to reference the calibration to a particular SOP or set of SOPs at some point away from the polarimeter. When there are multiple calibrations over a wavelength range, it is also important that these calibrations agree. In general, there are several types of referencing that can be done including, but not limited to: (1) canonical rotation, (2) rotation to a user-defined state, (3) alignment with respect to an internal axis/axes, (4) alignment of one wavelength calibration with respect to another, or (5) alignment with respect a fiber grating axis/axes. Each of these will be described in turn below.

Canonical rotation refers to a particular orientation of the projection states defined in equation (7). The canonical rotation is a three-dimensional rotation on the Poincare sphere that rotates a calibration matrix C to the desired canonical orientation, where this orientation is the same as that defined in equation (17). Thus, the first detector measures linear polarization at 0 degrees and the second detector performs the measurement at another angle, but is still measuring purely linear polarization. Alternatively, the matrix P has three zeroes, as shown in equation (17).

User-defined rotation is essentially the same as the canonical rotation, however in this case two measured SOPs are used instead of the projection states. Thus, for instance, the user may launch linear and circular polarization states. Calibration matrix C is then rotated so that the Stokes parameters produced by the polarimeter match the user inputs.

Alignment with respect to an internal axis or axes can also be used. The internal axis might be the high birefringence axis of a high birefringence polarimeter. One way to perform alignment to an internal high birefringence axis is to launch light into this axis and then rotate the calibration so that the polarization is linear for the state that is aligned with respect to the axis. Preferably, one of the detectors is already aligned with the high birefringence axis. In this case, the alignment can be done internally. If the detector is close the high birefringence axis, then the alignment accuracy can be improved through a high birefringence launch. Another possibility is to launch light of a single polarization and then vary the wavelength or temperature. The polarization will rotate around the local high birefringence axis as long as this high birefringence axis dominates the birefringence between the fiber polarimeter and the laser.

One result of a calibration that is referenced to a local high birefringence axis is that the polarimeter will provide a stable measurement of the power splitting ratio between the two high birefringence axes. This is also known as the extinction ratio of the light.

Finally, if the polarimeter is calibrated at many wavelengths, the projection states will rotate around the local birefringence, so this can also be used to find the axis.

It is to be noted that it is advantageous to have wavelength insensitive orthogonality of two states. This can be achieved if the two gratings are very close along the fiber. It is also aided if they have the same angle with respect to the high birefringence axis. In particular, if they are both close to the high birefringence axis, then it is advantageous for them to be separated by roughly half of a beat length. Even if they have some angle with respect to the high birefringence axis, if they are separated by a half beat length, they will remain orthogonal to first order as wavelength changes.

When utilizing alignment of one wavelength calibration with respect to another, a set of polarizations for one wavelength is launched and the same set is launched for another wavelength. After calibration at each wavelength, rotations are made on each calibration matrix so that the two sets of polarizations overlap.

Lastly, as mentioned above, it is possible to use alignment with respect to a fiber grating axis or axes. That is, it is possible to orient a given calibration with respect to one or more gratings in a fiber polarimeter. In this case, the orientation of the two gratings is aligned to some external marker in a set of free space optics, or to an axis within a high birefringence or other fiber.

Although the present invention has been described herein with respect to one or more embodiments, it will be understood that other arrangements or configurations can also be made without departing from the spirit and scope hereof. Hence, the present invention is deemed limited only by the appended claims and the reasonable interpretations thereof.

## Claims

1. A method of calibrating a polarimeter by creating a calibration matrix C from a plurality of N detector output signals (N≥4) associated with a plurality of N detectors, the calibration matrix C used to generate the Stokes parameters associated with an optical signal propagating along a signal path, the method comprising the steps of:

a) sequentially launching at least four optical signals into the polarimeter, each optical signal having a different state of polarization (SOP);
b) for each sequentially launched signal, measuring a plurality of optical signals including at least the detector output signals at each detector of the plurality of N detectors;
c) creating an initial calibration matrix; and
d) adjusting values of selected elements of the initial calibration matrix to satisfy at least one predefined constraint to determine the final calibration matrix.

2. The method as defined in claim 1, wherein in performing step c), the signals measured in step b) are used to create the initial calibration matrix.

3. The method as defined in claim 1, wherein in performing step c), using values associated with a tetrahedral polarimeter to create the initial calibration matrix.

4. The method as defined in claim 1, wherein in performing step b), the optical power associated with each launched signal is recorded and in performing step d), performing the steps of:

1) adjusting the first row of the initial calibration matrix to best fit the measured power values for each launched signal; and
2) adjusting the remainder of the calibration matrix values to best satisfy the at least one predefined constraint.

5. The method as defined in claim 1 wherein in performing step d), the at least one predefined constraint includes a signal constraint associated with the incoming at least four different optical signals.

6. The method as defined in claim 5 wherein the signal constraint is associated with both the optical power of each incoming optical signal and the degree of polarization (DOP) of each signal.

7. The method as defined in claim 1, wherein in performing step d), the predefined constraint includes a detector constraint associated with the plurality of N detectors.

8. The method as defined in claim 7 wherein the detector constraint is associated with the signal gain of each detector of the plurality of N detectors.

9. The method as defined in claim 1 wherein in performing step d), the at least one predefined constraint includes a computation constraint associated with performing at least two independent computations of the input polarizations of the launched signals and the final calibration matrix is determined by adjusting the values of each element until the difference between the at least two computations is minimized.

10. The method as defined in claim 1 wherein in performing step d), the at least one predefined constraint includes both a signal constraint associated with the incoming at least four different optical signals and a detector constraint associated with the plurality of detectors.

11. The method as defined in claim 1, wherein the steps are repeated for a predetermined number of separate wavelengths, forming a separate final calibration matrix for each wavelength, wherein the separate final calibration matrices are thereafter aligned to provide substantially the same result for each wavelength.

12. The method as defined in claim 1 wherein the optical responses of the plurality of N detectors are matched over a predetermined wavelength range.

13. The method as defined in claim 12 wherein in performing step b), a plurality of matched optical signals are measured, yielding a calibration matrix that is accurate over a predetermined wavelength range.

14. The method as defined in claim 1 wherein the polarimeter comprises at least four gratings created therealong and includes at least four detectors associated therewith in a one-to-one relationship, wherein the responses of the detectors are matched over a predetermined wavelength range.

**15.** The method as defined in claim 36 wherein in performing step b), a plurality of matched optical signals are measured, yielding a calibration matrix that is accurate over a predetermined wavelength range.

**16.** An in-line polarimeter comprising

a plurality of at least four separate gratings formed along a section of optical fiber, the plurality of at least four separate gratings including a first grating oriented along the optical axis of the section of optical fiber, a second grating oriented at a first predetermined angle with respect to the optical axis, a third grating oriented at a second predetermined angle with respect to the optical axis, and a fourth grating oriented at a third, predetermined angle with respect to the optical axis, each grating for scattering a portion of a propagating optical signal outward and away from the optical axis; and

a plurality of at least four separate photodetectors, each photodetector associated with a grating in a one-to-one relationship and disposed on an outer surface of the section of optical fiber so as to capture a portion of the scattered optical signal created by the associated grating and generate an output signal, the plurality of at least four output signals being indicative of the polarization state of the applied input signal, wherein the plurality of at least four separate photodetectors exhibit matched performance characteristics to create a wide bandwidth polarimeter.

**17.** An in-line polarimeter as defined in claim 16 wherein the second grating is oriented at an angle of approximately 53 ° with respect to the optical axis, the third grating is oriented at an angle of approximately 106° with respect to the optical axis, and the fourth grating is oriented at an angle of approximately 159° with respect to the optical axis.

**18.** An in-line polarimeter as defined in claim 16 wherein the plurality of at least four separate photodetectors exhibit matched performance with respect to one or more characteristics selected from the group consisting of: responsivity over a range of input wavelengths, range of operating temperatures and electrical bandwidth output.

FIG. 1

FIG. 2

FIG. 3

FIG. 4

```
Launch an optical signal of a first
state of polarization (SOP) into          ~ 100
polarimeter, maintain DOP of unity
```

```
Measure power (S₀) of current SOP
110   and N detector values (Dᵢ)
```

```
120   At least
      four      N      Adjust         ~ 125
      signals?         polarization
                       controller to
         Y             different SOP
```

```
Create an initial calibration
matrix C, of size 4xN, N being the     ~ 130
number of detectors in the
polarimeter
```

```
Least-squares fit the
first row of matrix C to      ~ 150
the measured power
```

```
Fit of matrix C to predefined
constraint                    ~ 160
```

FIG.5

FIG.6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61362633 B
- US 61380677 B
- US 4681450 A, R.M.A. Azzam
- US 6917427 B

**Non-patent literature cited in the description**

- **R.M.A. AZZAM.** In-line Light-saving Photopolarimeter and its Fiber-optic Analog. *Optics Letters,* 1987, vol. 12, 558-60